(19) **Europäisches Patentamt**
**European Patent Office**
**Office européen des brevets**

(11) **EP 2 126 500 B1**

(12) **FASCICULE DE BREVET EUROPEEN**

(45) Date de publication et mention de la délivrance du brevet:
**10.10.2018 Bulletin 2018/41**

(21) Numéro de dépôt: **08761918.5**

(22) Date de dépôt: **10.01.2008**

(51) Int Cl.:
*F25J 3/02* (2006.01)      *F28F 25/08* (2006.01)
*B01J 19/32* (2006.01)

(86) Numéro de dépôt international:
**PCT/FR2008/050045**

(87) Numéro de publication internationale:
**WO 2008/099105 (21.08.2008 Gazette 2008/34)**

(54) **PROCÉDÉ DE SÉPARATION UTILISANT UNE COLONNE À GARNISSAGE STRUCTURÉ ONDULÉ-CROISÉ POUR LA SÉPARATION D'UN MÉLANGE DE GAZ**

TRENNVERFAHREN MITHILFE EINER SÄULE MIT KORRUGIERTER QUERSTRUKTUR ZUR TRENNUNG EINER GASFÖRMIGEN MISCHUNG

SEPARATION METHOD USING A COLUMN WITH A CORRUGATED CROSS STRUCTURE PACKING FOR SEPARATING A GASEOUS MIXTURE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.01.2007  FR 0752694**
**12.09.2007  FR 0757533**

(43) Date de publication de la demande:
**02.12.2009  Bulletin 2009/49**

(73) Titulaire: **L'AIR LIQUIDE, Société Anonyme pour l'Etude et l'Exploitation des Procédés Georges Claude
75007 Paris (FR)**

(72) Inventeurs:
• **KOHLBERGER, Marcus**
**1190 Bruxelles (BE)**
• **LECLERCQ, François**
**F-28230 Epernon (FR)**

(74) Mandataire: **Mercey, Fiona Susan**
**L'Air Liquide SA**
**Direction de la Propriété Intellectuelle**
**75, Quai d'Orsay**
**75321 Paris Cedex 07 (FR)**

(56) Documents cités:
**EP-A- 0 837 031          EP-A- 1 186 843**
**WO-A-97/16247          US-A- 5 644 932**
**US-A1- 2001 040 303     US-B1- 6 578 377**

• **SULZER CHEMTECH: "Separation Columns for distillation and absorption" TECHNICAL BROCHURE, novembre 1991 (1991-11), XP002525446**

EP 2 126 500 B1

**Description**

La présente invention concerne un procédé de séparation utilisant une colonne à garnissage structuré ondulé-croisé pour la séparation d'un mélange de gaz, conformément au préambule de la revendication 1 et connu du document EP-A- 0 837 031.

Les anciennes installations pour la séparation des mélanges de monoxyde de carbone et d'hydrogène comprennent uniquement des colonnes à plateaux, alors que la nouvelle génération des installations de ce type utilise la technologie des colonnes à garnissages structurés ondulés-croisés sans interface modifiée (EP-A-0837031). L'utilisation des garnissages dans ces installations reste délicate, vu que les propriétés physiques ayant un impact sur l'efficacité de séparation, la mouillabilité et le comportement de moussage etc. ne sont pas comparables à celles des gaz de l'air. Ces garnissages structurés présentent à l'interface une perte de charge locale pouvant être la source d'un éventuel moussage du mélange à séparer. La présence de moussage nuit au bon fonctionnement de la séparation des différents produits à réaliser.

L'intérêt de cette invention est d'éviter la formation de mousse dans la partie dédiée à la séparation du mélange. L'un des paramètres permettant de contrôler l'éventuelle formation de moussage peut se résumer au nombre adimensionnel suivant : $S=T*m/\sigma$ où T est la tension de cisaillement à l'interface entre liquide et vapeur ($kgm^{-1}s^{-2}$), m est l'épaisseur du film de liquide coulant dur le garnissage (m) et $\sigma$ est la tension superficielle à l'interface liquide/vapeur ($kgs^{-2}$). Ce paramètre met donc en rapport les contraintes de cisaillement créées par le gaz sur le liquide avec la tension superficielle du liquide tel que décrit dans le brevet US-A-5644932. Il apparaît que pour les applications de la présente invention, la plage des valeurs de ce facteur S doit être comprise entre $150 \times 10^{-6}$ et $1500 \times 10^{-6}$.

Ce paramètre peut être ajusté de plusieurs manières :

- en jouant sur les paramètres géométriques du garnissage (au sein d'un même tronçon ou entre deux différents tronçons) c'est-à-dire :

  ○ l'angle de l'inclinaison $\delta$ des canaux par rapport à l'horizontale (de préférence entre 30° et 70°)
  ○ l'angle de pliage $\gamma$ des ondulations (de préférence entre 40° et 150°)
  ○ la densité du garnissage au moins dans sa région centrale (de préférence entre $300m^2/m^3$ et $1000m^2/m^3$)
  ○ le taux de perforation du garnissage (de préférence entre 3 % et 20 %)
  ○ le diamètre des perforations du garnissage (de préférence entre 1mm et 4mm)
  ○ le rayon de courbure de l'ondulation en passant d'une région centrale avec des ondulations inclinées avec un angle donné par rapport à la verticale à une région de bord où les ondulations sont inclinées avec un angle réduit par rapport à la verticale, voire deviennent verticales (de préférence entre 0.5 mm et 3 mm)

- en modifiant progressivement l'angle d'inclinaison des canaux de manière à avoir des canaux de plus en plus verticaux aux extrémités hautes et basses de celui-ci tel que décrit dans le brevet WO97/16247.

L'avantage principal d'opérer dans ces plages de fonctionnement par ajustement d'un ou de plusieurs paramètres précédemment cités est une optimisation de la capacité de séparation ou plus particulièrement une réduction de diamètre de colonne pour une capacité de séparation donnée. Il est donc possible de réduire considérablement les coûts d'investissement des colonnes ainsi de la boîte froide par ces ajustements. La réduction globale des équipements cryogéniques permet également une augmentation de la flexibilité de l'appareil ce qui est un deuxième avantage pendant les phases de démarrage et changement de marche.

Selon l'invention, il est prévu un procédé de séparation cryogénique d'un gaz ayant pour composants principaux au moins deux composants choisis dans le groupe suivant hydrogène, monoxyde de carbone, azote et méthane, selon la revendication 1.

Selon d'autres caractéristiques du procédé :

- au moins un corps de garnissage dans la section d'échange de chaleur et/ou de matière comprend une région centrale et une région inférieure et éventuellement une région supérieure, la région inférieure et éventuellement la région supérieure étant modifiée par rapport à la région centrale de sorte que la résistance à la montée de liquide y est réduite par rapport à celle dans la région centrale ;
- le gaz a pour composants principaux de l'hydrogène, du monoxyde de carbone, du méthane et éventuellement de l'azote ;
- le gaz a pour composants principaux de l'hydrogène, du monoxyde de carbone et éventuellement du méthane ainsi que de l'azote ;
- le garnissage est opéré à une charge gazeuse F comprise entre 0,2-2,5 $(Nm^{-2})^{0,5}$ où $F =(\rho_v.v_{gaz})^{0,5}$ et/ou le débit liquide dans le garnissage en $L/dm^2/h$ peut varier de 50 jusqu'à 600 $L/dm^2/h$ ;

- au moins un corps de garnissage dans la section d'échange de chaleur et/ou de matière comprend une région centrale et une région inférieure, la région inférieure étant modifiée par rapport à la région centrale de sorte que la résistance à la montée de liquide y est réduite par rapport à celle dans la région centrale ;
- le diamètre intérieur de la colonne varie d'une section à autre en fonction du chargement gazeux et liquide pour le gaz à séparer ;
- le garnissage a, au moins dans une région centrale, une densité de $300 m^2/m^3$ à $1000 m^2/m^3$ ;
- au moins une caractéristique du garnissage varie à intérieur de la même section la (les) caractéristique(s) étant choisie(s) dans le groupe :

  ○ densité de garnissage
  ○ l'angle d'inclinaison
  ○ l'angle de pliage
  ○ rayon de courbure
  ○ taux de perforation

- au moins une caractéristique du garnissage varie d'un tronçon à l'autre, la (les) caractéristique(s) étant choisie(s) dans le groupe :

  ○ densité de garnissage
  ○ l'angle d'inclinaison
  ○ l'angle de pliage
  ○ rayon de courbure
  ○ taux de perforation

L'invention sera décrite en plus de détail en se référant aux figures, dont la Figure 1 illustre un procédé au lavage au méthane selon l'invention et la Figure 2 illustre un procédé à condensation partielle selon l'invention, la Figure 3 représente schématiquement une vue des ondulations dans l'axe des ondes, la Figure 4 représente une vue schématique de dessus de la lamelle ondulée, la Figure 5 représente un procédé de séparation de dioxyde de carbone et la Figure 6 représente un procédé de séparation d'air qui ne sont pas couverts par l'invention.

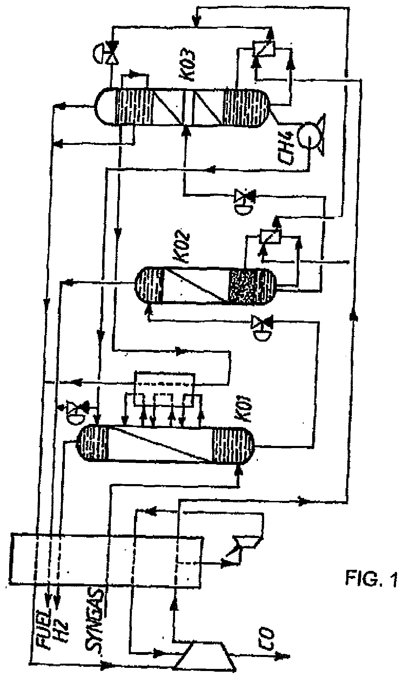

Dans les systèmes avec lavage au méthane (Figure 1), le gaz de synthèse sous pression refroidi à -180°C, est lavé par du méthane liquide dans la colonne K01 fonctionnant à haute pression (entre 12 et 50 bara) et une température la plus basse possible, le monoxyde de carbone est entraîné en cuve de colonne et l'hydrogène est produit en tête.

La colonne K01 contient au moins un corps de garnissage tel que décrit dans WO97/16247. L'usage d'un tel garnissage à interface modifiée est particulièrement intéressant, car l'hydrogène, ayant une perte de charge très faible par rapport à d'autres gaz, permet une opération à une charge gazeuse très élevée sans dégradation importante en termes d'efficacité de séparation. Le changement moins brutal à l'interface entre tronçons avec des garnissages à interface modifiée permet d'opérer à un paramètre S plus constant, ce qui réduit le risque de moussage à l'interface entre deux corps de garnissages et fiabilise l'opération de colonne en régime établie et dans les changements de marches.

L'hydrogène dissout est alors évacué dans la colonne de flash moyenne pression K02. Le binaire $CO/CH_4$ est alors séparé dans la colonne à distiller basse pression K03. Le CO gazeux est produit en tête, le méthane liquide produit en cuve étant pompé et recyclé pour le lavage dans K01.

La puissance frigorifique est produite dans un cycle CO.

Les autres colonnes K02, K03 peuvent également contenir des garnissages structurés ondulé-croisé à interface(s) modifiée(s) ou non modifiée.

Toutes les colonnes opèrent avec un facteur S compris entre $150 \times 10^{-6}$ et $1500 \times 10^{-6}$.

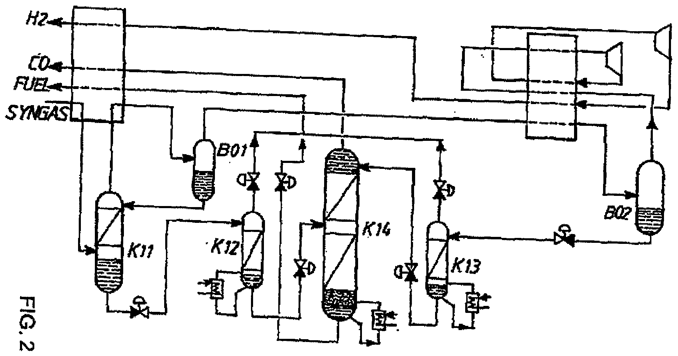

Dans les systèmes avec condensation partielle (Figure 2), le gaz de synthèse, lavé de son méthane dans K11 par du CO liquide issu de B01, est refroidi à la température la plus basse possible, la limitation étant la température de solidification du CO ; le liquide condensé dans B02 est essentiellement du CO.

Les colonnes de flash K12 et K13 éliminent l'hydrogène dissout respectivement dans les liquides de cuve de K11 (riche en méthane) et du pot B02 (riche en CO).

Les liquides issus des colonnes K12 et K13 alimentent alors la colonne à distiller K14 où s'effectue la séparation $CO/CH_4$. Dans la colonne de séparation $CO/CH_4$ (K14), ayant au moins deux tronçons de garnissage opérant à des reflux très différents, l'utilisation des tronçons de garnissage de densité et/ou angle d'inclinaison différents permet d'optimiser le paramètre S pour toute la colonne.

Les autres colonnes K02, K03 peuvent également contenir des garnissages structurés ondulé-croisé à interface(s) modifiée(s) ou non modifiée.

La puissance frigorifique est obtenue par détente d'hydrogène dans des turbines.

Dans le cas particulier où de l'azote est présent, une colonne de séparation $N_2/CO$ pourra être ajoutée en aval de la colonne CO/CH$_4$.

Toutes les colonnes opèrent avec un facteur S compris entre 150 X 10$^{-6}$ et 1500 X 10$^{-6}$.

Ici suit un exemple de calcul du facteur S pour une colonne de lavage au méthane.

Perte de charge linéaire pour de l'hydrogène impur avec 1.2mbar/m dans un garnissage structure à densité de 650m$^2$/m$^3$ :

$$\tau = \frac{D_h}{4} \cdot \frac{\Delta P}{\Delta L} = \frac{0.0062m}{4} \cdot 120\frac{N}{m^3} = 0.186\frac{N}{m^2}$$

L'épaisseur du film pour un écoulement laminaire de méthane liquide à 93 K dans l'hydrogène montant est :

$$m = \left[\frac{3 \cdot \mu_L \cdot \Gamma}{\rho_L \cdot (\rho_L - \rho_V) \cdot g}\right]^{1/3} = \left[\frac{3 \cdot 0.00021\frac{kg}{m \cdot s} \cdot 0.0052\frac{kg}{m \cdot s}}{460\frac{kg}{m^3} \cdot \left(460\frac{kg}{m^3} - 7.7\frac{kg}{m^3}\right) \cdot 9.81\frac{m}{s^2}}\right]^{1/3} = 0.000117m$$

Pour du méthane liquide à 93K la tension superficielle σ = 0.018N/m

$$S = \frac{\tau \cdot m}{\sigma} = \frac{0.186\frac{N}{m^2} \cdot 0.000117m}{0.018\frac{N}{m}} = 1209 * 10^{-6}$$

Vérification de conditions d'écoulement laminaire dans un film tombant de liquide Re$_L$ < 2000

$$\text{Re}_L = \frac{4 \cdot \Gamma}{\mu_L} = \frac{4 \cdot 0.0052\frac{kg}{m \cdot s}}{0.00021\frac{kg}{m \cdot s}} = 99$$

Légende

| | |
|---|---|
| τ | Tension de cisaillement à l'interface vapeur/liquide (N/m2) |
| σ | Tension superficielle de liquide (N/m) |
| Γ | Débit massique liquide par unité de largeur de surface d'échange (kg/m/s) |
| $\mu_L$ | Viscosité dynamique de gaz (kg/m/s) |
| $\rho_L$ | Densité de liquide (kg/m3) |
| pv | Densité de vapeur (kg/m3) |
| $D_h$ | Diamètre hydraulique du canal de garnissages structuré (m) |
| ΔP/ΔL | Perte de charge linéaire de gaz dans le sens vertical (N/m3) |
| m | Epaisseur de film de liquide (m) |
| g | Constant de gravitation (9.81 m/s2) |
| S | Paramètre sans dimensions caractérisante les forces internes et externes à l'interface vapeur liquide |
| Re$_L$ | Nombre de Reynolds du film tombant de liquide (sans dimensions) |

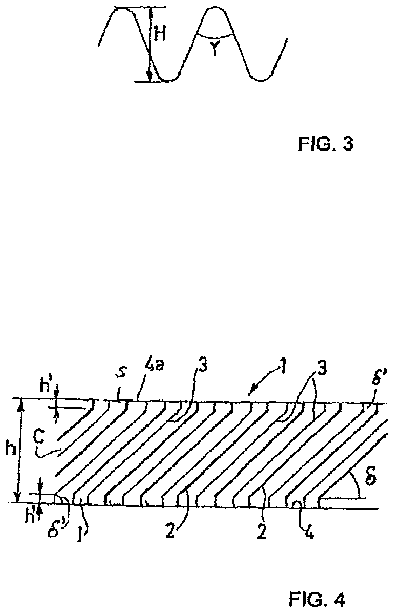

La figure 3 montre une lamelle de garnissage ayant une ondulation de hauteur H avec angle de pli γ.

Sur la figure 4 est représentée une lamelle 1, présentant des ondulations obliques, parallèles, dont les crêtes 2 sont représentés en traits gras et les creux 3 en traits fins.

L'inclinaison des ondes est définie par l'angle δ formé entre la crête d'onde 2 et le bord inférieur 4 dans la région centrale C. Une région supérieure S allant du bord supérieur 4a de l'élément jusqu'à la limite supérieure de la région centrale C et dans une région inférieure I allant du bord inférieur de l'élément jusqu'à la limite inférieure de la région centrale C, chaque région S, I ayant une hauteur h'. L'angle formé entre les crêtes d'ondes et le bord 4 est δ$_1$ =

90° mais peut avoir d'autres valeurs.

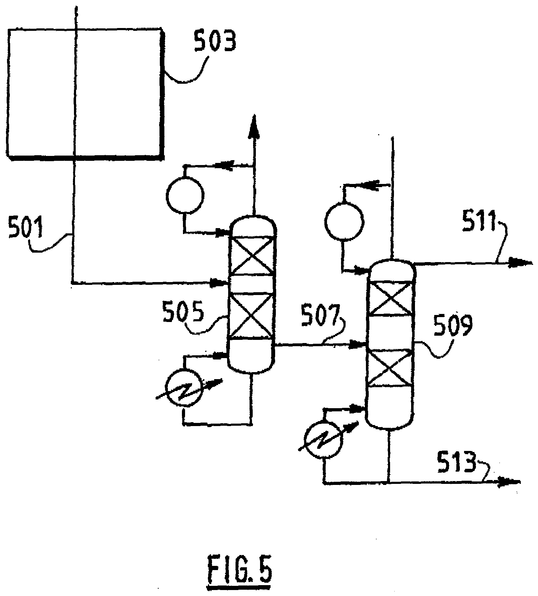

Dans la Figure 5, on voit un procédé de séparation de dioxyde de carbone par distillation qui n'est pas couvert par l'invention. Un débit 501 de dioxyde de carbone mélangé avec de l'azote, de l'oxygène et de l'argon est refroidi dans un échangeur 503, séparé dans une colonne de distillation 505 ayant un condenseur de tête et un rebouilleur de cuve. Le liquide de cuve 507 de la colonne 505 est envoyé à une colonne 509 ayant un condenseur de tête et un rebouilleur de cuve. La colonne 509 produit en tête un débit 511 et en cuve un débit 513. Le débit 513 est le produit liquide riche en dioxyde de carbone et le débit 511 contient de l'azote, de l'argon et de l'oxygène. Ce procédé est décrit dans le détail dans EP-A-503910.

D'autres exemples d'appareils pouvant être opérés selon le procédé de l'invention sont donnés dans les demandes de brevet US-A-2008196583, US-A-2008196584, US-A-2008196585 et US-A-2008196587.

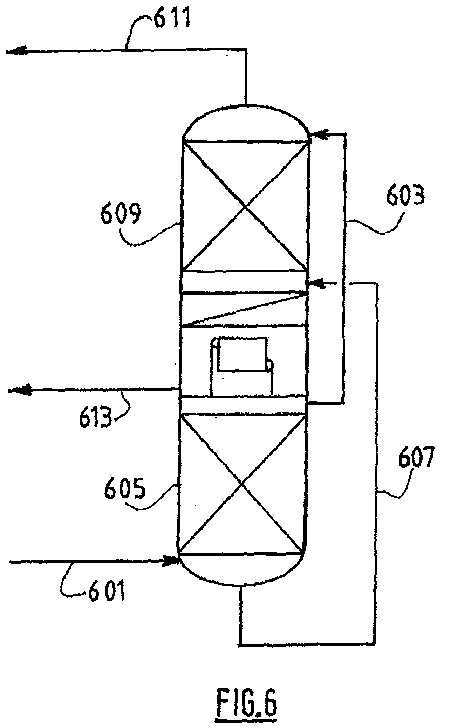

La Figure 6 illustre une double colonne de séparation d'air qui n'est pas couverte par l'invention. D'autres types de colonnes ne sont également pas couverts par l'invention, telles que des simples colonnes, des colonnes de mélange, des triple colonnes, des colonnes de séparation d'argon etc.

L'air refroidi, comprimé et épuré 601 est envoyé en cuve d'une colonne moyenne pression 605 reliée thermiquement à une colonne basse pression 609. Des débits de reflux 607, 603 sont envoyés de la colonne moyenne pression à la colonne basse pression. Des débits riche en oxygène 613 et en azote 611 sont soutirés de la colonne basse pression.

**Revendications**

1. Procédé de séparation cryogénique d'un gaz ayant pour composants principaux au moins deux composants choisis dans le groupe suivant: hydrogène, monoxyde de carbone, azote et méthane, le procédé utilisant au moins une colonne de distillation à garnissage structuré ondulé-croisé (K02, K03, 505, 509, 605, 609) et/ou au moins une colonne d'absorption à garnissage structuré ondulé-croisé (K01) avec au moins une section d'échange de chaleur et/ou de matière entre un liquide descendant et un gaz montant **caractérisé en ce que** le paramètre S dans cette section est compris entre $150 \times 10^{-6}$ et $1500 \times 10^{-6}$, où $S = T*m/\sigma$, T étant la tension de cisaillement à l'interface entre liquide et vapeur ($kgm^{-1}s^{-2}$), m étant l'épaisseur du film de liquide coulant sur le garnissage (m) et $\sigma$ étant la tension superficielle à l'interface liquide/vapeur ($kgs^{-2}$).

2. Procédé selon la revendication 1 dans lequel au moins un corps de garnissage dans la section d'échange de chaleur et/ou de matière comprend une région centrale (C) et une région inférieure (I) et éventuellement une région supérieure (S), la région inférieure et éventuellement la région supérieure étant modifiée par rapport à la région centrale de sorte que la résistance à la montée de liquide y est réduite par rapport à celle dans la région centrale.

3. Procédé de distillation selon la revendication 1 ou 2 dans lequel le gaz a pour composants principaux de l'hydrogène, du monoxyde de carbone et éventuellement du méthane ainsi que de l'azote.

4. Procédé selon l'une des revendications précédentes dans lequel le garnissage est opéré à une charge gazeuse F comprise entre 0,2-2,5 $(Nm^2)^{0,5}$ où $F = (\rho_v.v_{gaz})^{0,5}$ et/ou le débit liquide dans le garnissage en $L/dm^2/h$ peut varier de 50 jusqu'à 600 $L/dm^2/h$.

**Patentansprüche**

1. Verfahren zur kryogenen Trennung eines Gases aufweisend als Hauptbestandteile mindestens zwei Komponenten, ausgewählt aus der folgenden Gruppe: Wasserstoff, Kohlenmonoxid, Stickstoff und Methan, wobei das Verfahren mindestens eine Destillationskolonne mit korrugierter Querstrukturfüllung (K02, K03, 505, 509, 605, 609) und/oder mindestens eine Absorptionskolonne mit korrugierter Querstrukturfüllung (K01) mit mindestens einem Wärme- und/oder Materialtauschabschnitt zwischen einer absteigenden Flüssigkeit und einem aufsteigenden Gas verwendet, **dadurch gekennzeichnet, dass** der Parameter S in diesem Abschnitt im Bereich zwischen $150 \times 10^{-6}$ und $1500 \times 10^{-6}$ liegt, wobei $S = T*m/\sigma$, wobei T die Schubspannung an der Schnittstelle zwischen Flüssigkeit und Dampf ($kgm^{-1}s^{-2}$) ist, wobei m die Dicke des Flüssigkeitsfilms ist, die auf der Füllung (m) fließt, und wobei $\sigma$ die Oberflächenspannung an der Schnittstelle Flüssigkeit/Dampf ($kgs^{-2}$) ist.

2. Verfahren nach Anspruch 1, wobei mindestens ein Füllungskörper im Wärme- und/oder Materialtauschabschnitt eine zentrale Region (C) und eine untere Region (I) und eventuell eine obere Region (S) umfasst, wobei die untere Region und eventuell die obere Region mit Bezug auf die zentrale Region derart modifiziert sind, dass der Widerstand gegen den Anstieg von Flüssigkeit dort mit Bezug auf denjenigen in der zentralen Region reduziert ist.

3. Destillationsverfahren nach Anspruch 1 oder 2, wobei das Gas als Hauptbestandteile Wasserstoff, Kohlenmonoxid und eventuell Methan sowie Stickstoff aufweist.

4. Verfahren nach einem der vorhergehenden Ansprüche, wobei die Füllung mit einer gasförmigen Ladung F betrieben wird, die zwischen 0,2-2,5 $(Nm^2)^{0,5}$ liegt, wobei F $=(\rho_{v.} v_{gaz})^{0,5}$ ist, und/oder der Flüssigkeitsdurchsatz in der Füllung mit L/dm²/h von 50 bis 600 L/dm²/h variieren kann.

**Claims**

1. Method for the cryogenic separation of a gas having for main components at least two components selected in the following group: hydrogen, carbon monoxide, nitrogen and methane, the method using at least one distillation column having cross-corrugated structured packing (K02, K03, 505, 509, 605, 609) and/or at least one absorption column having cross-corrugated structured packing (K01) with at least one section for heat and/or mass exchange between a descending liquid and an ascending gas **characterised in that** the parameter S in this section is between 150 X $10^{-6}$ and 1500 X $10^{-6}$, where S=T*m/$\sigma$, T being the shear stress at the liquid/vapour interface (kgm$^{-1}$s$^{-2}$), m being the thickness of the film of liquid flowing over the packing (m) and $\sigma$ being the surface tension at the liquid/vapour interface (kgs$^{-2}$).

2. Method according to claim 1, wherein at least one packing body in the section for heat and/or mass exchange comprises a central region (C) and a lower region (I) and optionally an upper region (S), the lower region and optionally the upper region being modified relative to the central region such that the resistance to the rise of liquid is reduced therein relative to that in the central region.

3. Method of distillation according to claim 1 or 2, wherein the gas has for main components hydrogen, carbon monoxide and optionally methane as well as nitrogen.

4. Method according to any one of the preceding claims, wherein the packing is operated with a gas feed F between 0.2-2.5 $(Nm^2)^{0.5}$ where F $=(\rho_{v.} v_{gaz})^{0.5}$ and/or the liquid flow rate in the packing in L/dm²/h may vary from 50 to 600 L/dm²/h.

FIG. 1

FIG. 2

FIG. 3

FIG. 4

FIG.5

FIG.6

# EP 2 126 500 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0837031 A
- US 5644932 A
- WO 9716247 A
- EP 503910 A

- US 2008196583 A
- US 2008196584 A
- US 2008196585 A
- US 2008196587 A